# EUROPÄISCHE PATENTSCHRIFT

(11) **EP 0 430 342 B1**
(45) Veröffentlichungstag und Bekanntmachung des Hinweises auf die Patenterteilung: **28.06.1995**
(21) Anmeldenummer: 90203053.5
(22) Anmeldetag: 19.11.1990
(51) Int. Cl.: H04M 3/56

(54) **Schaltungsanordnung zur Herstellung von Konferenzverbindungen**
Circuit for setting up conference connections
Circuit pour l'établissement de connexions de conférence

(30) Priorität: 25.11.1989 DE 3939044
(43) Veröffentlichungstag der Anmeldung: 05.06.1991
(73) Patentinhaber: Philips Patentverwaltung GmbH, 22335 Hamburg (DE); Philips Electronics N.V., 5621 BA Eindhoven (NL)
(72) Erfinder: Hessler, Peter, Dipl.-Ing., W-8520 Erlangen (DE); Schmidt, Manfred, Dipl.-Ing., W-8740 Salz (DE); Selbach, Bernd, Dipl.-Ing., W-8501 Eckental (DE)
(74) Vertreter: Peuckert, Hermann, Dipl.-Ing.

(56) Entgegenhaltungen:
- EP-A- 0 337 524
- GB-A- 2 061 670
- GB-A- 2 063 019

## Beschreibung

Die Erfindung betrifft eine Schaltungsanordnung zur Herstellung von Konferenzverbindungen mit Teilnehmereinheiten, die zu einem Ring zusammengeschlossen sind, und bei der
- mindestens ein Summencodewort von einer Teilnehmereinheit des Ringes zur nächsten läuft,
- ein Summencodewort aus Abtastwerten der Signale aller Teilnehmer einer Konferenz gebildet ist,
- jede Teilnehmereinheit Mittel enthält, die dafür vorgesehen sind, das Summencodewort durch Verwendung des aktuellen Abtastwertes zu aktualisieren und aus dem Summencodewort ein Konferenzsignal für den zugeordneten Teilnehmer zu bilden.

Eine derartige Schaltungsanordnung ist in der DE 39 01 909 beschrieben (Anmeldetag: 24.01.1989). Bei dieser Anordnung ist jedoch nicht vorgesehen zu prüfen, ob der Umlauf der Summencodeworte im Ring fehlerfrei erfolgt.

Auch der britischen Patentanmeldung GB 2 061 670 A ist eine Schaltungsanordnung zu Herstellung von Konferenzverbindungen (Conferencing communications system) mit den oben aufgeführten Merkmalen beschrieben. Bei dieser Schaltungsanordnung ist ebenfalls nicht vorgesehen, die im Ring umlaufenden Summencodeworte auf Fehlerfreiheit zu überprüfen.

Der Erfindung liegt die Aufgabe zugrunde, eine Schaltungsanordnung der eingangs genannten Art anzugeben, bei der die Überwachung eines ordnungsgemäßen Umlaufes von Summencodeworten im Ring möglich ist und bei der die Summencodeworte den Ring in vorgegebener Zeit durchlaufen, ohne daß eine Synchronisierung einzelner Arbeitsabläufe der Teilnehmereinheiten erforderlich ist.

Diese Aufgabe wird gelöst durch
- programmierte Prozessoren, von denen jeder die Funktion mindestens einer Teilnehmereinheit hat,
- eine Schnittstellenschaltung zur Ansteuerung der programmierten Prozessoren mit Schreib- und Lesebefehlen und zur Steuerung der Ein - bzw. Ausgabe von Teilnehmer- bzw. Konferenzsignalen,
- erste Programmteile, die dafür vorgesehen sind,
   - jedes Summencodewort nach seiner Aktualisierung durch einen der Prozessoren in einen Eingangsspeicher des nächstfolgenden Prozessors einzuschreiben und es aus diesem Speicher bei Bedarf auszulesen,
- zweite Programmteile, die dafür vorgesehen sind,
   - jedes aktualisierte Summencodewort in ein Prüfwort zu transformieren,
   - den Inhalt des Eingangsspeichers des nächstfolgenden Prozessors zu einem späteren Zeitpunkt mit dem Prüfwort zu überschreiben,
   - das Prüfwort aus diesem Speicher des nächstfolgenden Prozessors auszulesen,
   - das vorher in diesem Speicher enthaltene Summencodewort mit dem Prüfwort zu vergleichen und
   - gegebenenfalls ein Alarmsignal abzugeben,
- sowie durch unterschiedliche Varianten von Programmen, die dafür vorgesehen sind, aufeinanderfolgenden Prozessoren die Abarbeitung der Programmteile für die Aktualisierung des Summencodeworts einerseits und für den Vergleich mit dem Prüfwort andererseits in zeitlich versetzter Reihenfolge zu ermöglichen.

Die verwendeten Prozessoren können freiprogrammierbare oder maskenprogrammierbare Prozessoren sein.

Erfolgt die Übertragung von Prozessor zu Prozessor seriell, so werden die Eingangsspeicher der Prozessoren als Serien-Parallel-Wandler ausgeführt. Damit können die Prozessoren die Summencodeworte bzw. die Prüfworte schon in der Form einlesen, in der sie von ihnen verarbeitet werden und es wird folglich Rechenzeit eingespart. Das hat zur Folge, daß sämtliche Prozessoren mit Parallel-Serien-Wandlern als Ausgangsspeicher versehen werden müssen.

Ein Prozessor, der diese beiden Speicher schon als integrierte Bestandteile enthält, ist der DSP 56001.

Anhand der Figuren und eines Ausführungsbeispiels soll die Erfindung näher erläutert werden.
- Figur 1: zeigt ein Prinzipschaltbild einer Anordnung nach der Erfindung und
- Figur 2: zeigt ein Schema zur Programmierung von Prozessoren in einer erfindungsgemäßen Anordnung.

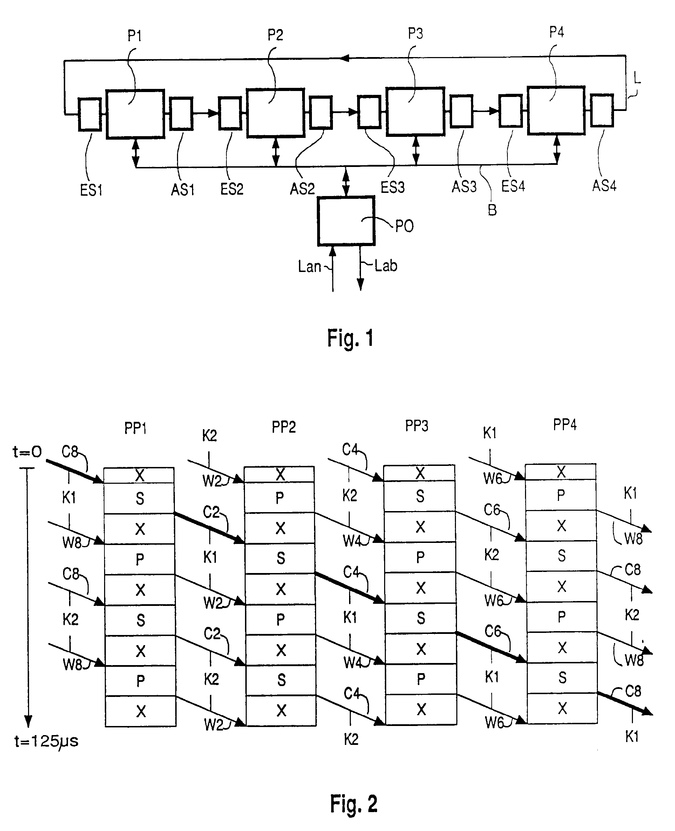

Die Figur 1 zeigt einen Ring L, in den vier programmierbare Prozessoren P1, P2, P3 und P4, vier zugeordnete Serien-Parallel-Wandler als Eingangsspeicher ES1, ES2, ES3 und ES4 sowie vier zugeordnete Parallel-Serien-Wandler als Ausgangsspeicher AS1, AS2, AS3 und AS4 eingebaut sind. Bei den Prozessoren P1 bis P4 handelt es sich um freiprogrammierbare Prozessoren des Typs DSP 56001, die die Speicher ES1 bis ES4 und AS1 bis AS4 als integrierte Bestandteile enthalten; jeder von ihnen verarbeitet genau zwei Teilnehmersignale.

Über ein Busleitungssystem B stehen die Prozessoren P1 bis P4 in Verbindung mit einer Schnittstellenschaltung - hier ein Schnittstellenprozessor P0 - der die Teilnehmersignale über eine Leitung Lan als Multiplexsignale empfängt und über eine Leitung Lab die Konferenzsignale als Multiplexsignal für die einzelnen Teilnehmer wieder abgibt. Der Schnittstellenprozessor P0 wirkt u.a. als Demultiplexer, der die Daten der Konferenzteilnehmer so über die Busleitung B an die einzelnen Prozessoren P1, P2, P3 und P4 verteilt, daß alle Prozessoren die Teilnehmerbits gleichzeitig erhalten.

Im vorliegenden Beispiel sind die Signale der einzelnen Teilnehmer im DCDM-Code codiert und haben eine Bitrate von 32 kbit/s. Damit eine Summenbildung im Sinne einer linearen Superposition der Teilnehmersignale möglich ist, müssen die einzelnen Prozessoren die Teilnehmersignale zunächst in (linear quantisierte) PCM-Signale transcodieren. Die Codeworte - in diesem Fall handelt es sich um 1-Bit-Codeworte - aller acht Teilnehmersignale treffen gleichzeitig an den Eingängen der Prozessoren P1, P2, P3 und P4 ein. Das Eintreffen jedes vierten Teilnehmerbits synchronisiert bei allen Prozessoren gleichzeitig die Abarbeitung einer Folge von Teilaufgaben. Einzelne Arbeitsabläufe der Prozessoren sind nicht aufeinander synchronisiert. Die gemeinsamen Startpunkte der Prozessoren werden im folgenden Synchronisationszeitpunkte genannt.

Im wesentlichen hat z.B. der Prozessor P1 innerhalb eines Abtastintervalls der PCM-Codeworte (125 »s) folgende, grob gegliederte Teilaufgaben zu erfüllen:
- die Transcodierung der empfangenen Teilnehmerbits (32 kbit/s) mit dem vorangegangenen Abschnitt des Teilnehmersignals zu linear quantisierten PCM-Codeworten, mit einer Abtastrate von 8 kHz,
- das Auslesen eines Summencodewortes - es besteht aus der Summe aller aktuellen PCM-Codeworte (Abtastwerte) der Signale aller Teilnehmer einer Konferenz - aus dem Eingangsspeicher ES1, Verarbeitung dieses Summencodewortes mit dem PCM-Codewort zu einem neuen Summencodewort sowie die Weitergabe des neuen Summencodewortes an den Eingangsspeicher ES2,
- die Erzeugung eines Konferenzsignals für die angeschlossenen Teilnehmer im DCDM-Code (32 kbit/s) und dessen Übertragung an den Schnittstellenprozessor P0,
- das Auslesen eines Prüfwortes aus dem Eingangsspeicher ES1, den Vergleich des Prüfwortes (im vorliegenden Beispiel ein invertiertes Summencodewort) mit dem zugehörigen Summencodewort, Bildung und Weitergabe eines neuen Prüfwortes sowie
- gegebenenfalls die Erzeugung von Alarmsignalen.

Während der oben erwähnten 125 »s - es handelt sich um die in der Aufgabenstellung genannte Zeit - müssen auch sämtliche Summencodeworte einen vollständigen Ringdurchlauf ausgeführt haben. Um den vollständigen Ringdurchlauf zu ermöglichen, wird erfindungsgemäß bei jedem Prozessor dafür gesorgt, daß die Zeit zwischen dem Einschreiben eines Summencodewortes in einen Eingangsspeicher und dem Auslesen, Verarbeiten und Einschreiben des neuen Summencodewortes in den Eingangsspeicher des nächstfolgenden Prozessors - im folgenden Durchlaufzeit genannt - ein Viertel von 125 »s beträgt.

Die Durchlaufzeit besteht aus der Übertragungszeit von einem Prozessor zum nächstfolgenden und aus der Verweilzeit im Prozessor. Wegen der langen Übertragungszeit (serielle Übertragung) muß die Verweilzeit möglichst kurz gemacht werden, damit die Summe die erforderliche Durchlaufzeit ergibt. Den Maßnahmen, die zu einer möglichst kurzen Verweilzeit führen, liegt die Erkenntnis zugrunde, daß es mehrere gleichwertige Möglichkeiten für die zeitliche Reihenfolge der Programmodule gibt, die sich bei noch feinerer Aufteilung der Teilaufgaben ergeben.

Daher wird in jedem Prozessor eine Umordnung der Programmodule (ohne deren inhaltliche Änderung) derart vor genommen, daß ein Prozessor das Summencodewort erst zu einem Zeitpunkt aus seinem Eingangsspeicher ausliest, wenn sicher ist, daß der vorangegangene Prozessor mit der Berechnung dieses Summencodewortes ordnungsgemäß fertig geworden ist und dieses schon in den Eingangsspeicher eingeschrieben hat. Mit anderen Worten, die Teilaufgabe, die die Verarbeitung des Summencodewortes vorsieht, wird bei jedem Prozessor später in Angriff genommen.

In Fig. 2 sind symbolisch die Programme PP1 bis PP4 der Prozessoren P1 bis P4 dargestellt. Jeder Prozessor beginnt mit dem allen Prozessoren gemeinsamen Synchronisationszeitpunkt (t = o) sein Programm von oben nach unten abzuarbeiten, wie die Zeitachse links oben in Fig. 2 andeutet. Im Ring der Prozessoren kreisen zwei Summencodeworte, die in jedem der Prozessoren aktualisiert werden, das heißt, die Abtastwerte vom vorhergehenden Umlauf werden durch die aktuellen Abtastwerte der beiden Teilnehmersignale, die einem Prozessor zugeführt werden, ersetzt. Jedes Summencodewort entspricht einer Konferenz, wobei jeder der insgesamt acht Teilnehmer Teilnehmer keiner, einer oder beider Konferenzen sein kann.

Die Programmteile, die ein Summencodewort verarbeiten, sind in Fig. 2 mit S bezeichnet und diejenigen Programmteile, die den Vergleich eines Summencodewortes mit dem zugehörigen Prüfwort - also einem invertierten Codewort - vornehmen, sind mit P bezeichnet. Alle anderen Programmteile sind mit einem X versehen.

Nach Abarbeitung eines Programmteils X im Programm PP1 des Prozessors P1 beginnt dieser mit dem Programmteil S und liest dabei aus seinem Eingangsspeicher ES1 ein Summencodewort C8 der ersten Konferenz K1 in seinen Arbeitsspeicher ein. Dieser Vorgang ist mit dem ersten verstärkt gezeichneten Pfeil links oben in der Fig. 2 angedeutet. Die Ziffer hinter dem Buchstaben C der Summencodeworte gibt den Teilnehmer an, durch dessen Signal das Summencodewort zuletzt aktualisiert wurde. Das durch den obersten Programmteil S des Programms PP1 aktualisierte Summencodewort C8 wird daher als Summencodewort C2 in den Eingangsspeicher ES2 des Prozessors P2 eingeschrieben, weil durch den Prozessor P1 das Summencodewort der Konferenz K1 zuletzt mit dem Signal des zweiten Teilnehmers aktualisiert worden ist. Die Prozessoren - wie oben schon erwähnt - verarbeiten nämlich die Daten zweier Teilnehmer.

Der Prozessor P2 liest seinerseits das Summencodewort C2 zu Beginn seines Programmteils S aus seinem Eingangsspeicher ES2 aus und macht daraus das Summencodewort C4 und so fort.

Die Länge der Programmteile X des Programms PP2 vom Synchronisationspunkt bis zum Einlesen des Summencodewortes C2 der ersten Konferenz K1 ist so bemessen, daß der Prozessor P1 mit Sicherheit - falls alles fehlerfrei abläuft - das Codewort C2 erzeugt und abgegeben hat. Entsprechendes gilt paarweise für die Prozessoren P2, P3 und P4.

Die Folge aller verstärkt gezeichneten Pfeile von links oben nach rechts unten in Fig. 2 stellt eine graphische Darstellung eines Umlaufs des Summencodewortes der ersten Konferenz K1 im Ring L dar. Im Speicher ES1 bleibt es solange gespeichert, bis es von dort nach erneutem Start des Programms PP1 ausgelesen wird.

In einem hier nicht näher angebbaren zeitlichen Abstand folgt auf das Summencodewort C8 der Konferenz K1 das Prüfwort W8, wie der zweite Pfeil links oben am Programm PP1 zeigt. Sobald es in den Prozessor P1 eingelesen worden ist, wird es durch den Programmteil P mit dem in einem internen Speicher des Prozessors abgespeicherten Codewort C8 verglichen, d.h., das Prüfwort W8 wird invertiert und auf Identität mit dem Summencodewort C8 geprüft. Falls keine Übereinstimmung vorliegt, gibt der Prozessor P1 an den Prozessor P0 ein Alarmsignal ab. Im Programmteil P des Prozessors P1 wird dann das Codewort C2 der Konferenz K1 bitweise invertiert und als Prüfwort W2 in den Speicher ES2 des Prozessors P2 eingeschrieben. Hier geschieht zeitverzögert das Gleiche wie im Prozessor P1. Auch bei den Summencodeworten und Prüfworten der Konferenz K2 laufen alle Rechenschritte analog zu denen der Konferenz K1 ab.

Die Fig. 2 zeigt, daß für die beschriebene Weitergabe der Summencodeworte und Prüfworte nur zwei verschiedene Programmvarianten erforderlich sind. Dabei müssen aufeinanderfolgende Prozessoren im Ring jeweils mit unterschiedlichen Varianten dieses Programms geladen werden.

Mit der erfindungsgemäßen Anordnung können folgende Fehlfunktionen detektiert werden:
- Bitfehler innerhalb eines Summencodewortes,
- teilweiser oder völliger Verlust eines Summencodewortes,
- Ausfall eines Prozessors.

## Patentansprüche

1. Schaltungsanordnung zur Herstellung von Konferenzverbindungen mit Teilnehmereinheiten (ES1,P1,AS1; ES2,P2,AS2; ES3,P3,AS3; ES4,P4,AS4), die zu einem Ring (L) zusammengeschlossen sind, und bei der
- mindestens ein Summencodewort von einer Teilnehmereinheit des Ringes (L) zur nächsten läuft,
- ein Summencodewort aus Abtastwerten der Signale aller Teilnehmer einer Konferenz gebildet ist,
- jede Teilnehmereinheit (ES1,P1,AS1; ES2,P2,AS2; ES3,P3,AS3; ES4,P4,AS4) Mittel enthält, die dafür vorgesehen sind, das Summencodewort durch Verwendung des aktuellen Abtastwertes zu aktualisieren und aus dem Summencodewort ein Konferenzsignal für den zugeordneten Teilnehmer zu bilden,
gekennzeichnet durch
- programmierte Prozessoren (P1 bis P4), von denen jeder die Funktion mindestens einer Teilnehmereinheit (ES1,P1,AS1; ES2,P2,AS2; ES3,P3,AS3; ES4,P4,AS4) hat,
- eine Schnittstellenschaltung (PO) zur Ansteuerung der programmierten Prozessoren (P1 bis P4) mit Schreib- und Lesebefehlen und zur Steuerung der Ein - bzw. Ausgabe von Teilnehmer - bzw. Konferenzsignalen,
- erste Programmteile (S) in jedem der Prozessoren, die dafür vorgesehen sind,
- jedes Summencodewort nach seiner Aktualisierung durch einen der Prozessoren (P1 bis P4) in einen Eingangsspeicher (ES1 bis ES4) des nächstfolgenden Prozessors einzuschreiben und es aus diesem Speicher (ES1 bis ES4) bei Bedarf auszulesen,
- zweite Programmteile (P) in jedem der Prozessoren, die dafür vorgesehen sind,
- jedes aktualisierte Summencodewort in ein Prüfwort zu transformieren,
- den Inhalt des Eingangsspeichers (ES1 bis ES4) des nächstfolgenden Prozessors zu einem späteren Zeitpunkt mit dem Prüfwort zu überschreiben,
- das Prüfwort aus diesem Speicher des nächstfolgenden Prozessors auszulesen,
- das vorher in diesem Speicher enthaltene Summencodewort mit dem Prüfwort zu vergleichen und
- gegebenenfalls ein Alarmsignal abzugeben,
- sowie durch unterschiedliche Varianten von Programmen (PP1 bis PP4) in den Prozessoren, die dafür vorgesehen sind, aufeinanderfolgenden Prozessoren die Abarbeitung der Programmteile (S,P) für die Aktualisierung des Summencodeworts einerseits und für den Vergleich mit dem Prüfwort andererseits in zeitlich versetzter Reihenfolge zu ermöglichen.

2. Schaltungsanordnung nach Anspruch 1,
dadurch gekennzeichnet,
daß es sich bei den Eingangsspeichern (ES1 bis ES4) um Serien-Parallel-Wandler handelt und jedem der Prozessoren (P1 bis P4) ein Parallel-Serien-Wandler (AS1 bis AS4) als Ausgangsspeicher nachgeschaltet ist.

3. Schaltungsanordnung nach Anspruch 2,
dadurch gekennzeichnet,
daß Prozessoren verwendet werden, die die Eingangs- und Ausgangswandler als integrierte Bestandteile enthalten.

4. Schaltungsanordnung nach einem der vorhergehenden Ansprüche,
dadurch gekennzeichnet,
daß als Prüfworte bitweise invertierte Summencodeworte verwendet werden.

## Claims

1. Circuit arrangement for establishing conference connections among participant conference units (ES1,P1,AS1; ES2,P2,AS2; ES3,P3,AS3; ES4,P4,AS4) linked to form a loop (L), and wherein:
- at least one sum codeword passes from one participant conference unit of the loop (L) to the next;
- a sum codeword is formed from sample values of the signals of all the participants in a conference;
- and each participant conference unit (ES1,P1,AS1; ES2,P2,AS2; ES3,P3,AS3; ES4,P4,AS4) comprises means by which the sum codeword is updated by the use of the actual sample value and by which a conference signal for the allocated participant is formed from the sum codeword, characterized by:
- programmed processors (P1 to P4), each of which having the function of at least one participant conference unit (ES1,P1,AS1; ES2,P2,AS2; ES3,P3,AS3; ES4,P4,AS4);
- an interface circuit (P0) for actuating the programmed processors (P1 to P4) by read and write commands and for controlling the input and output respectively, of participant signals and conference signals;
- first program parts (S) in each of the processors, for:
- writing each sum codeword, after it has been updated by one of the processors (P1 to P4), into an input memory (ES1 to ES4) of the next processor and reading same from that memory (ES1 to ES4), as required;
- second program parts (P) in each of the processors, for
- transforming each updated sum codeword into a test word;
- overwriting at a later instant the contents of the input memory (ES1 to ES4) of the next processor with the test word;
- reading the test word from this memory of the next processor;
- comparing the sum codeword previously stored in this memory with the test word, and
- generating an alarm signal, if need be,
- and by different variants of programs (PP1 to PP4) in the processors, which are intended for making it possible for successive processors to execute the program parts (S,P) in a time-shifted order so as to update the sum codeword and also to compare the sum codeword with the test word.

2. Circuit arrangement as claimed in Claim 1, characterized in that serial-to-parallel converters are concerned when referring to the input memories (ES1 to ES4) and in that parallel-to-serial converters (AS1 to AS4) are concerned when referring to the output memories following the processors (P1 to P4).

3. Circuit arrangement as claimed in Claim 2, characterized in that processors are used comprising the input and output converters as integrated components.

4. Circuit arrangement as claimed in one of the preceding Claims, characterized in that sum codewords inverted bit-by-bit are used as test words.

## Revendications

1. Montage de circuit pour l'établissement de communications de conférence avec des appareils d'abonnés (ES1, P1, AS1; ES2, P2, AS2; ES3, P3, AS3; ES4, P4, AS4), qui sont interconnectés en un cercle (L), et dans lequel:
- au moins un mot de code somme circule d'un appareil d'abonné du cercle (L) au suivant,
- un mot de code somme est formé de valeurs d'échantillonnage des signaux de tous les abonnés d'une conférence,
- chaque appareil d'abonné (ES1, P1, AS1; ES2, P2, AS2; ES3, P3, AS3; ES4, P4, AS4) contient des moyens qui sont prévus pour actualiser le mot de code somme par utilisation de la valeur d'échantillonnage actuelle et pour former à partir du mot de code somme un signal de conférence pour les abonnés concernés,
caractérisé par :
- des processeurs programmés (P1 à P4) qui remplissent chacun la fonction d'au moins un appareil d'abonné (ES1, P1, AS1; ES2, P2, AS2; ES3, P3, AS3; ES4, P4, AS4),
- un circuit d'interface (PO) pour commander les processeurs programmés (P1 à P4) par des instructions d'écriture et de lecture et pour commander l'entrée ou la sortie de signaux d'abonnés ou de conférence,
- des premières parties de programmes (S) dans chacun des processeurs qui sont prévues :
- pour écrire chaque mot de code somme, après son actualisation par un des processeurs (P1 à P4) dans une mémoire d'entrée (ES1 à ES4) du processeur suivant et pour l'extraire de cette mémoire (ES1 à ES4) en cas de besoin,
- des deuxièmes parties de programmes (P) qui sont prévues pour :
- transformer chaque mot de code somme actualisé en un mot de contrôle,
- écraser le contenu de la mémoire d'entrée (ES1 à ES4) du processeur suivant immédiatement à un moment ultérieur par le mot de contrôle,
- extraire le mot de contrôle de cette mémoire du processeur suivant immédiatement,
- comparer le mot de code somme contenu précédemment dans cette mémoire au mot de contrôle et
- délivrer éventuellement un signal d'alarme,
- ainsi que par différentes variantes de programmes (PP1 à PP4) dans les processeurs qui sont prévues pour permettre aux processeurs successifs de traiter les parties de programmes (S, P) pour l'actualisation du mot de code somme, d'une part, et pour effectuer la comparaison avec le mot de code, d'autre part, dans une séquence décalée dans le temps.

2. Montage de circuit selon la revendication 1,
caractérisé en ce que :
les mémoires d'entrée (ES1 à ES4) sont constituées de convertisseurs série/parallèle et en aval de chacun des processeurs (P1 à P4) est connecté un convertisseur parallèle-série (AS1 à AS4) en tant que mémoire de sortie.

3. Montage de circuit selon la revendication 2,
caractérisé en ce que :
on utilise des processeurs qui contiennent les convertisseurs d'entrée et de sortie comme composants intégrés.

4. Montage de circuit selon l'une quelconque des revendications précédentes,
caractérisé en ce que :
on utilise comme mots de contrôle des mots de code sommes inversés par bits.
